# EUROPÄISCHE PATENTANMELDUNG

(11) **EP 4 362 318 A1**
(43) Veröffentlichungstag der Anmeldung: **01.05.2024**
(21) Anmeldenummer: 22204504.9
(22) Anmeldetag: 28.10.2022
(51) Int. Cl.: H02P 6/34, H02P 29/60, H02P 23/14

(54) **VERFAHREN UND MASCHINENSTEUERUNG ZUR TEMPERATURÜBERWACHUNG EINER ELEKTROMECHANISCHEN MASCHINE**

(71) Anmelder: Siemens Aktiengesellschaft, 80333 München (DE)
(72) Erfinder: Amschler, Benjamin, 95500 Heinersreuth (DE); Khalil, Mohamed, 81379 München (DE); Lorenzi, Juan Manuel, 80796 München (DE); Malik, Vincent, 80636 München (DE); Paffrath, Meinhard, 85622 Feldkirchen (DE); Wolf Pozzo, Christian Andreas, 90513 Zirndorf (DE)
(74) Vertreter: Siemens Patent Attorneys

(57) **Zusammenfassung**

Erfindungsgemäß werden Strukturdaten (SD) über eine Geometrie, eine Wärmeleitfähigkeit und eine elektrische Leitfähigkeit von Elementen der zu überwachenden Maschine (M) eingelesen. Darüber hinaus werden vorgegebene temperaturkritische Stellen (P1, P2) der Maschine bezüglich der Strukturdaten (SD) lokalisiert. Weiterhin werden mittels eines eine Vielzahl von ortsaufgelösten Ansatzfunktionen (FE1, FE2, ...) umfassenden, ersten thermischen Simulationsmodells (ST) eine Vielzahl von Temperaturverläufen (TV) in der Maschine ortsaufgelöst simuliert. Ausgehend davon wird ein reduziertes thermisches Simulationsmodell (RST) mit einer geringeren Vielzahl von Ansatzfunktionen (F1, F2, ...) derart generiert und eingestellt, dass es die Temperaturverläufe (TV) an den temperaturkritischen Stellen (P1, P2) reproduziert. Im laufenden Betrieb der Maschine werden dann elektrische Betriebsdaten (U, I) der Maschine erfasst, und anhand der Strukturdaten (SD) und der elektrischen Betriebsdaten (U, I) werden fortlaufend elektrische Energieverluste (QE) in der Maschine mittels eines elektrischen Simulationsmodells (SE) der Maschine ortsaufgelöst simuliert. Weiterhin werden anhand der Strukturdaten (SD) und der simulierten elektrischen Energieverluste (QE) fortlaufend Temperaturen (RT1, RT2) an den temperaturkritischen Stellen (P1, P2) mittels des reduzierten thermischen Simulationsmodells (RST) ermittelt und zur Temperaturüberwachung der Maschine ausgegeben.

## Beschreibung

Ein sicherer Betrieb von elektromechanischen Maschinen, wie beispielsweise Elektromotoren, erfordert insbesondere im Bereich höherer Leistungen in vielen Fällen eine Temperaturüberwachung von kritischen Maschinenkomponenten oder temperaturkritischen Stellen der Maschine. So sollte beispielsweise die Isolation einer Statorwicklung eines Elektromotors nicht höheren Temperaturen ausgesetzt werden, um ihre Funktion nicht zu gefährden.

Die Temperaturen vieler temperaturkritischer Stellen oder Maschinenkomponenten können jedoch nicht oder nur schwer direkt gemessen werden. So ist es in der Regel technisch sehr aufwändig, Temperatursensoren an einem Rotor eines Motors zu installieren und Sensorsignale von dort zu einer Überwachungseinrichtung zu transportieren.

Um dennoch zumindest Abschätzungen über zu erwartende Betriebstemperaturen zu erhalten, werden häufig historische Betriebsdaten einer Maschine verwendet. Zu diesem Zweck werden aber in der Regel große Mengen von historischen Betriebsdaten für die betreffende Maschine benötigt, die eine Vielzahl von Betriebsbedingungen abdecken.

Es ist weiterhin bekannt, Messwerte von Temperatursensoren auszuwerten, die an leichter zugänglichen Stellen der zu überwachenden Maschine angebracht sind. Anhand dieser Messwerte kann dann mit Hilfe von physikalischen Simulationsmodellen auf die Temperaturen von weniger zugänglichen Maschinenkomponenten rückgeschlossen werden.

Es ist Aufgabe der vorliegenden Erfindung, ein Verfahren und eine Maschinensteuerung zur Temperaturüberwachung einer elektromechanischen Maschine anzugeben, die eine effizientere und/oder weniger aufwändige Temperaturüberwachung erlauben.

Gelöst wird diese Aufgabe durch ein Verfahren mit den Merkmalen des Patentanspruchs 1, durch eine Maschinensteuerung mit den Merkmalen des Patenanspruchs 10, durch ein Computerprogrammprodukt mit den Merkmalen des Patenanspruchs 11 sowie durch ein computerlesbares Speichermedium mit den Merkmalen des Patentanspruchs 12.

Zur Temperaturüberwachung einer elektromechanischen Maschine anhand von elektrischen Betriebsdaten der Maschine werden Strukturdaten über eine Geometrie, eine Wärmeleitfähigkeit und eine elektrische Leitfähigkeit von Elementen der Maschine eingelesen. Darüber hinaus werden vorgegebene temperaturkritische Stellen der Maschine bezüglich der Strukturdaten lokalisiert. Weiterhin werden mittels eines eine Vielzahl von ortsaufgelösten Ansatzfunktionen umfassenden, ersten thermischen Simulationsmodells anhand der Strukturdaten eine Vielzahl von Temperaturverläufen in der Maschine ortsaufgelöst simuliert. Ausgehend davon wird ein reduziertes thermisches Simulationsmodell mit einer gegenüber dem ersten thermischen Simulationsmodell geringeren Vielzahl von Ansatzfunktionen derart generiert und eingestellt, dass es die Temperaturverläufe spezifisch an den temperaturkritischen Stellen im Wesentlichen reproduziert. Im laufenden Betrieb der Maschine werden dann die elektrischen Betriebsdaten erfasst, und anhand der Strukturdaten und der erfassten elektrischen Betriebsdaten werden fortlaufend elektrische Energieverluste in der Maschine mittels eines elektrischen Simulationsmodells der Maschine ortsaufgelöst simuliert. Weiterhin werden anhand der Strukturdaten und der simulierten elektrischen Energieverluste fortlaufend Temperaturen an den temperaturkritischen Stellen mittels des reduzierten thermischen Simulationsmodells ermittelt und zur Temperaturüberwachung der Maschine ausgegeben.

Zum Ausführen des erfindungsgemäßen Verfahrens sind eine Maschinensteuerung, ein Computerprogrammprodukt sowie ein computerlesbares, vorzugsweise nichtflüchtiges Speichermedium vorgesehen.

Das erfindungsgemäße Verfahren sowie die erfindungsgemäße Maschinensteuerung können beispielsweise mittels eines oder mehrerer Computer, Prozessoren, anwendungsspezifischer integrierter Schaltungen (ASIC), digitaler Signalprozessoren (DSP) und/oder sogenannter "Field Programmable Gate Arrays" (FPGA) ausgeführt bzw. implementiert werden.

Ein Vorteil der Erfindung ist insbesondere darin zu sehen, dass in oder an der Maschine herrschende Temperaturen anhand von elektrischen Betriebsdaten ermittelt werden können, die häufig in einer Maschinensteuerung ohnehin vorliegen. Eine Installation von Temperatursensoren an oder in der Maschine selbst ist daher in vielen Fällen nicht mehr erforderlich. Darüber hinaus können mittels der Simulationen auch Temperaturen an schwer zugänglichen Stellen der Maschine, insbesondere im Inneren der Maschine ermittelt und/oder überwacht werden.

Aufgrund der Fokussierung der Temperaturbestimmung auf vorgegebene temperaturkritische Stellen kann in vielen Fällen ein gegenüber dem ersten thermischen Simulationsmodell erheblich vereinfachtes reduziertes thermisches Simulationsmodell generiert werden. Ein solches reduziertes thermisches Simulationsmodell erfordert in der Regel wesentlich geringere Rechenressourcen. Zur Echtzeitüberwachung der Maschine kann das reduzierte thermische Simulationsmodell deshalb in vielen Fällen mit verhältnismäßig geringem Rechenaufwand in Echtzeit ausgeführt werden.

Vorteilhafte Ausführungsformen und Weiterbildungen der Erfindung sind in den abhängigen Ansprüchen angegeben.

Gemäß einer vorteilhaften Ausführungsform der Erfindung kann durch die elektrischen Betriebsdaten ein Betriebsstrom und/oder eine Betriebsspannung der Maschine oder einer Komponente davon quantifiziert werden. Alternativ oder zusätzlich können die elektrischen Betriebsdaten eine Zwischenkreisspannung, eine Frequenz und/oder einen Modulationsgrad quantifizieren. Die obigen elektrischen Betriebsdaten liegen in vielen Maschinensteuerungen ohnehin vor, so dass zur Temperaturüberwachung der Maschine häufig keine zusätzlichen Installationen an oder in der zu überwachenden Maschine erforderlich sind.

Gemäß einer weiteren vorteilhaften Ausführungsform der Erfindung können die Ansatzfunktionen des reduzierten thermischen Simulationsmodells derart aus den Ansatzfunktionen des ersten thermischen Simulationsmodells selektiert und/oder derart parametrisiert werden, dass eine Abweichung zwischen den vom reduzierten thermischen Simulationsmodell und den vom ersten thermischen Simulationsmodell ermittelten Temperaturverläufen spezifisch an den temperaturkritischen Stellen minimiert wird. Durch eine Fokussierung auf die temperaturkritischen Stellen bzw. eine Vernachlässigung oder vereinfachte Berücksichtigung von nicht-kritischen Stellen reduziert sich in der Regel die Anzahl der für das reduzierte thermische Simulationsmodell erforderlichen Ansatzfunktionen erheblich. Der Reduktionsprozess kann insbesondere derart ausgeführt werden, dass die Abweichung spezifisch, vorzugsweise oder ausschließlich an den temperaturkritischen Stellen minimiert wird und die minimierte Abweichung einen vorgegebenen Abweichungs-Schwellwert nicht überschreitet.

Weiterhin kann eine Umgebungstemperatur der Maschine und/oder eine Luftgeschwindigkeit in einer Umgebung der Maschine fortlaufend sensorisch erfasst werden. Die Temperaturen an den temperaturkritischen Stellen können dann abhängig von der Umgebungstemperatur und/oder der Luftgeschwindigkeit ermittelt werden. Auf diese Weise kann eine Simulationsgenauigkeit in vielen Fällen signifikant verbessert werden.

Darüber hinaus können anhand der Strukturdaten und mechanischen Betriebsdaten der Maschine mechanische Energieverluste in der Maschine mittels eines mechanischen Simulationsmodells der Maschine ortsaufgelöst simuliert werden. Die Ermittlung der Temperaturen an den temperaturkritischen Stellen kann dann anhand der simulierten mechanischen Energieverluste durchgeführt werden. Das mechanische Simulationsmodell kann dabei insbesondere Reibungsverluste, z.B. in Achslagern der Maschine simulieren. Zu diesem Zweck können die Strukturdaten Reibungskoeffizienten für die von Reibungsverlusten betroffenen Maschinenelemente umfassen.

Weiterhin können die mechanischen Betriebsdaten eine Drehzahl, ein Drehmoment, eine Bewegungsgeschwindigkeit und/oder eine ausgeübte Kraft der Maschine oder einer Komponente davon quantifizieren. Derartige mechanische Betriebsdaten liegen in vielen Maschinensteuerungen ohnehin vor, so dass zur Temperaturüberwachung der Maschine häufig keine zusätzlichen Installationen an oder in der zu überwachenden Maschine erforderlich sind.

Nach einer vorteilhaften Weiterbildung der Erfindung können Strukturdaten über die elektrische Leitfähigkeit und/oder die Wärmeleitfähigkeit der Maschinenelemente abhängig von den ermittelten Temperaturen modifiziert werden. Eine Simulation der elektrischen Energieverluste und/oder eine Ermittlung der Temperaturen an den temperaturkritischen Stellen kann dann anhand der modifizierten Strukturdaten durchgeführt werden. Damit kann insbesondere eine Temperaturabhängigkeit von elektrischen Widerständen bei der Simulation der elektrischen Energieverluste und/oder eine Temperaturabhängigkeit einer Wärmeleitfähigkeit bei der Ermittlung der Temperaturen berücksichtigt werden. Auf diese Weise kann eine Simulationsgenauigkeit in der Regel signifikant erhöht werden.

Weiterhin kann abhängig von den ermittelten Temperaturen an den temperaturkritischen Stellen die Maschine heruntergeregelt, eine Angabe über einen optimierten Betrieb der Maschine ausgegeben, eine Empfehlung für einen optimierten Betrieb der Maschine ausgegeben und/oder eine Kühlungseinrichtung angesteuert werden. Durch die vorstehenden Maßnahmen kann in vielen Fällen ein Verschleiß der Maschine erheblich verringert und/oder ihre Lebensdauer erhöht werden.

Nach einer weiteren vorteilhaften Ausführungsform der Erfindung kann anhand der Strukturdaten eine Position einer vorgegebenen Maschinenkomponente ermittelt werden. Die ermittelte Position kann dann als temperaturkritische Stelle verwendet werden, wobei die ermittelte Temperatur an dieser Position als komponentenspezifischer Temperaturwert ausgegeben wird. Auf diese Weise können eine oder mehrere kritische Maschinenkomponenten, z.B. ein Rotor, ein Stator, eine Wicklung, ein Achslager und/oder eine Isolierung eines Elektromotors individuell überwacht werden.

Ein Ausführungsbeispiel der Erfindung wird nachfolgend anhand der Zeichnung näher erläutert. Dabei veranschaulichen jeweils in schematischer Darstellung:
- Figur 1: eine Temperaturüberwachung eines Elektromotors durch eine Motorsteuerung und
- Figur 2: eine Generierung eines reduzierten thermischen Simulationsmodells für die Motorsteuerung.

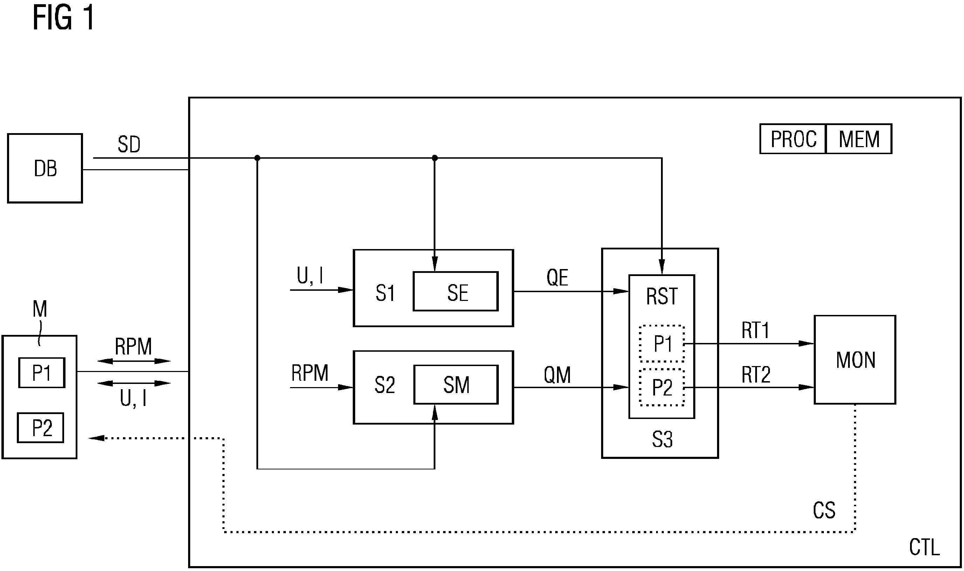

Figur 1 veranschaulicht eine Temperaturüberwachung eines Elektromotors M als elektromechanische Maschine durch eine Motorsteuerung CTL als erfindungsgemäße Maschinensteuerung. Alternativ kann die zu überwachende elektromechanische Maschine M auch ein Roboter, eine Werkzeugmaschine, eine Turbine, eine Produktionsmaschine, ein Kraftfahrzeug, ein 3-D-Drucker oder eine Komponente davon sein oder derartige Maschinen oder Komponenten umfassen. Die Motorsteuerung CTL kann insbesondere einen Inverter umfassen.

Darüber hinaus verfügt die Motorsteuerung CTL über einen oder mehrere Prozessoren PROC zum Ausführen eines erfindungsgemäßen Verfahrens sowie über einen oder mehrere Speicher MEM zum Speichern von zu verarbeitenden Daten.

In Figur 1 ist die Motorsteuerung CTL extern zur elektromechanischen Maschine M dargestellt und an diese gekoppelt. Alternativ dazu kann die Motorsteuerung CTL auch ganz oder teilweise in die elektromechanische Maschine M integriert sein.

Die Motorsteuerung CTL dient zum Betreiben und Steuern des Elektromotors M. Zu diesem Zweck kann die Motorsteuerung CTL insbesondere eine Motordrehzahl RPM für den Elektromotor M vorgeben und/oder den Elektromotor M mit einer entsprechenden Betriebsspannung U und/oder einem entsprechenden Betriebsstrom I versorgen. Die Energieversorgung des Elektromotors M kann dabei insbesondere durch einen Inverter (nicht dargestellt) der Motorsteuerung CTL erfolgen. Darüber hinaus kann die Motorsteuerung CTL von Sensoren des Elektromotors M aktuell gemessene Motordrehzahlen RPM, Betriebsspannungen U und/oder Betriebsströme I erfassen. Aus Übersichtlichkeitsgründen sind gemessene und vorgegebene Betriebsdaten in den Figuren jeweils durch das gleiche Bezugszeichen bezeichnet.

Alternativ oder zusätzlich zu den Motordrehzahlen RPM können durch die Motorsteuerung CTL weitere mechanische Betriebsdaten der elektromechanischen Maschine M erfasst oder verwendet werden, zum Beispiel ein Drehmoment, eine Bewegungsgeschwindigkeit und/oder eine ausgeübte Kraft der Maschine M oder einer Komponente davon. Entsprechend können neben den Betriebsspannungen U oder den Betriebsströmen I weitere aktuelle elektrische Betriebsdaten der elektromechanischen Maschine M oder einer Komponente davon durch die Motorsteuerung CTL erfasst oder verwendet werden.

Für das vorliegende Ausführungsbeispiel sei angenommen, dass die Maschine M zwei temperaturkritische Stellen P1 und P2 aufweist, deren Temperatur spezifisch zu überwachen ist. Im Falle eines Elektromotors kann eine solche temperaturkritische Stelle insbesondere eine vorgegebene Stelle eines Rotors, eines Stators, einer Wicklung, eines Achslagers oder einer Isolierung des Elektromotors sein.

Neben P1 und P2 können in oder an der Maschine M noch ein oder mehrere weitere temperaturkritische Stellen zur Überwachung vorgesehen sein. Aus Übersichtlichkeitsgründen sind in den Figuren jedoch nur die Stellen P1 und P2 stellvertretend für alle zu überwachenden temperaturkritischen Stellen explizit dargestellt.

Die Motorsteuerung CTL ist weiterhin an eine Datenbank DB gekoppelt, in der Strukturdaten SD über eine Geometrie, eine Wärmeleitfähigkeit und eine elektrische Leitfähigkeit von Elementen der Maschine M gespeichert sind. Eine Wärmeleitfähigkeit kann dabei äquivalent durch einen Wärmewiderstand und eine elektrische Leitfähigkeit durch einen elektrischen Widerstand ausgedrückt oder dargestellt werden.

Darüber hinaus umfassen die Strukturdaten SD Reibungskoeffizienten für von Reibungsverlusten betroffene Elemente der Maschine M. Dies können insbesondere Reibungskoeffizienten für eine Reibung zwischen einer Rotorachse und einem Achslager sein.

Beispiele für die durch die Strukturdaten SD beschriebenen Maschinenelemente sind insbesondere Maschinenkomponenten wie Rotoren, Statoren, Wicklungen, Achslager oder Isolierungen von Elektromotoren oder Teile derartiger Maschinenkomponenten. Insbesondere werden durch die Strukturdaten SD Maschinenelemente mit spezifischem Einfluss auf eine elektrische Leitung, auf eine Wärmeleitung und/oder auf eine Reibung beim Betrieb der Maschine M beschrieben. Dies können beispielsweise Beschichtungen, elektrische Leitungen, Schaltelemente, Wärmebrücken oder andere Konstruktionselemente der Maschine M sein. Die Strukturdaten SD spezifizieren die Wärmeleitfähigkeit, die elektrische Leitfähigkeit und/oder die Reibung vorzugsweise in ortsaufgelöster Form.

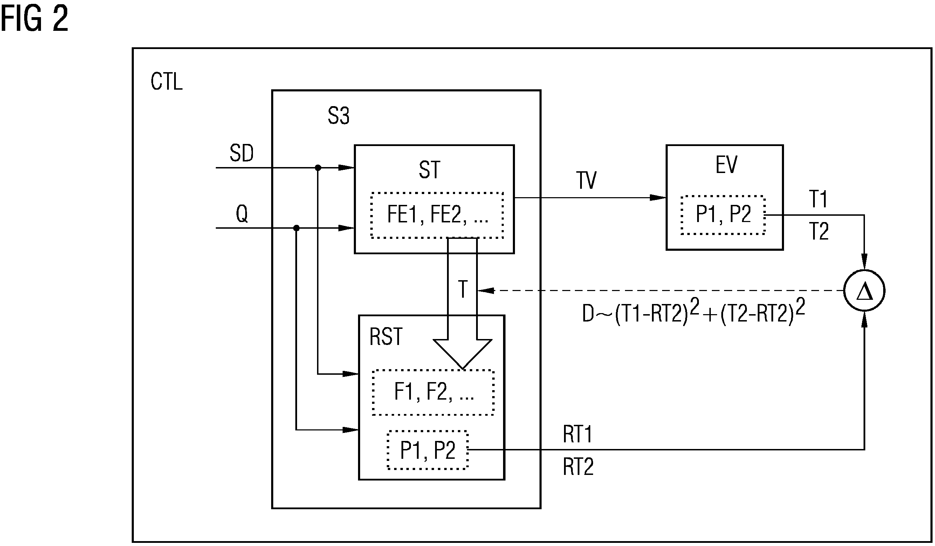

Die Motorsteuerung CTL umfasst ein erstes Simulationsmodul S1 mit einem elektrischen Simulationsmodell SE der Maschine M, ein zweites Simulationsmodul S2 mit einem mechanischen Simulationsmodell SM der Maschine M sowie ein drittes Simulationsmodul S3 mit einem reduzierten thermischen Simulationsmodell RST der Maschine M. Das reduzierte thermische Simulationsmodell RST wird aus einem vorgegebenen detaillierten thermischen Simulationsmodell der Maschine M generiert. Die Generierung des reduzierten thermischen Simulationsmodells RST wird weiter unten in Zusammenhang mit Figur 2 näher erläutert.

Das erste Simulationsmodul S1 dient zum fortlaufenden ortsund zeitaufgelösten Simulieren von elektrischen Energieverlusten QE in der Maschine M anhand des elektrischen Simulationsmodells SE. Das zweite Simulationsmodul S2 dient zum fortlaufenden orts- und zeitaufgelösten Simulieren von mechanischen Energieverlusten QM in der Maschine M mittels des mechanischen Simulationsmodells SM. Schließlich dient das dritte Simulationsmodul S3 zum fortlaufenden Ermitteln von Temperaturen RT1 und RT2 an den temperaturkritischen Stellen P1 und P2 mittels des reduzierten thermischen Simulationsmodells RST.

Das elektrische Simulationsmodell SE und das mechanische Simulationsmodell SM können dabei ggf. zu einem elektromechanischen Simulationsmodell kombiniert werden. Durch die Simulationsmodule S1, S2 und S3 wird jeweils eine im Betrieb der Maschine M mitlaufende Echtzeit-Simulation ausgeführt.

Zur Initialisierung der Simulationsmodelle SE, SM und RST liest die Motorsteuerung CTL die Strukturdaten SD von der Datenbank DB ein und speist die eingelesenen Strukturdaten SD zumindest jeweils teilweise in die Simulationsmodule S1, S2 und S3 ein. Infolgedessen wird das elektrische Simulationsmodell SE durch Strukturdaten SD über die Geometrie und die elektrische Leitfähigkeit von Maschinenelementen initialisiert. Analog dazu wird das mechanische Simulationsmodell SM durch Strukturdaten SD über die Geometrie und die Reibung von Maschinenelementen initialisiert. Schließlich wird das reduzierte thermische Simulationsmodell RST durch Strukturdaten SD über die Geometrie und die Wärmeleitfähigkeit von Maschinenelementen initialisiert.

Zur Ausführung der vorstehenden Simulationen sind viele effiziente Verfahren und Modelle zur physikalischen Simulation verfügbar. Insbesondere können finite-Elemente-Verfahren zur Simulation verwendet werden. So kann das elektrische Simulationsmodell SE, das mechanische Simulationsmodell SM, das detaillierte thermische Simulationsmodell und/oder ggf. das reduzierte thermische Simulationsmodell jeweils als finite-Elemente-Modell ausgestaltet sein und mittels einer Vielzahl bekannter Simulationsbibliotheken implementiert werden.

Nach der Initialisierung der Simulationsmodelle SE, SM und RST können die beschriebenen Simulationen anhand der erfassten aktuellen Betriebsdaten, hier U, I und RPM der Maschine M in Echtzeit ausgeführt werden. Zu diesem Zweck werden die aktuellen elektrischen Betriebsdaten, hier die Betriebsspannung U und der Betriebsstrom I, fortlaufend in das erste Simulationsmodul S1 eingespeist. Das erste Simulationsmodul S1 simuliert dann anhand der elektrischen Betriebsdaten U und I mittels des initialisierten elektrischen Simulationsmodells SE fortlaufend die elektrischen Energieverluste QE in der Maschine M in orts- und zeitaufgelöster Form. Die simulierten elektrischen Energieverluste QE werden durch das erste Simulationsmodul S1 in das dritte Simulationsmodul S3 eingespeist.

Weiterhin werden die aktuellen mechanischen Betriebsdaten, hier die aktuelle Drehzahl RPM, fortlaufend in das zweite Simulationsmodul S2 eingespeist. Das zweite Simulationsmodul S2 simuliert damit anhand der mechanischen Betriebsdaten RPM mittels des initialisierten mechanischen Simulationsmodells SM fortlaufend die mechanischen Energieverluste QM in der Maschine M in orts- und zeitaufgelöster Form. Die simulierten mechanischen Energieverluste QM werden durch das zweite Simulationsmodul S2 in das dritte Simulationsmodul S3 eingespeist.

Die Energieverluste QE und QM wirken offensichtlich als Wärmequellen in der Maschine M. Die Wärme dieser Wärmequellen verteilt sich in der Maschine M gemäß ihrer lokalen Wärmeleitfähigkeit.

Darüber hinaus werden eine Umgebungstemperatur und/oder eine Luftgeschwindigkeit in einer Umgebung der Maschine M sensorisch erfasst und ebenfalls in das dritte Simulationsmodul S3 eingespeist.

Das dritte Simulationsmodul S3 ermittelt schließlich anhand der simulierten, orts- und zeitaufgelösten Energieverluste QE und QM sowie anhand der Umgebungstemperatur oder Luftgeschwindigkeit mittels des initialisierten reduzierten thermischen Simulationsmodells RST fortlaufend die Temperaturen RT1 und RT2 an den temperaturkritischen Stellen P1 und P2 in zeitaufgelöster Form.

Vorzugsweise können die ermittelten Temperaturen RT1 und RT2 zu den Simulationsmodellen SE, SM und RST rückgeführt werden, um die den Modellen SE, SM und RST zugrundeliegenden Strukturdaten SD zu modifizieren. Auf diese Weise können im elektrischen Simulationsmodell SE temperaturabhängige elektrische Widerstände, im reduzierten thermischen Simulationsmodell RST temperaturabhängige Wärmewiderstände und/oder im mechanischen Simulationsmodell SM temperaturabhängige mechanische Eigenschaften von Maschinenelementen berücksichtigt werden. Damit kann in vielen Fällen eine Genauigkeit der Simulationen signifikant erhöht werden.

Die ermittelten Temperaturen RT1 und RT2 werden vom dritten Simulationsmodul S3 zu einem Überwachungsmodul MON der Motorsteuerung CTL übermittelt. Das Überwachungsmodul MON prüft anhand der übermittelten Temperaturen RT1 und RT2 fortlaufend, ob eine zulässige Höchsttemperatur an der betreffenden temperaturkritischen Stelle P1 bzw. P2 überschritten und/oder eine jeweilige Solltemperatur eingehalten wird. Dies kann beispielsweise durch Vergleich mit vorgegebenen Schwellwerten und/oder mit vorgegebenen Temperaturintervallen erfolgen.

In Abhängigkeit von diesen Prüfungen kann durch das Überwachungsmodul MON die Maschine M heruntergeregelt, eine Kühleinrichtung der Maschine M angesteuert und/oder eine Angabe oder eine Empfehlung für einen optimierten Betrieb der Maschine M ausgegeben werden. Zu einer entsprechenden Ansteuerung der Maschine M wird durch das Überwachungsmodul MON ein geeignetes Steuersignal CS gebildet und - wie in Figur 1 durch einen punktierten Pfeil angedeutet - zur Maschine M übermittelt.

Die Erfindung erlaubt eine effiziente und genaue Temperaturüberwachung der Maschine bzw. des Motors M anhand von aktuell gemessenen oder durch die Motorsteuerung CTL vorgegebenen Betriebsdaten, hier U, I, RPM, die in vielen Maschinensteuerungen, Motorsteuerungen oder Invertern ohnehin vorliegen. Auf diese Weise kann eine Temperaturüberwachung implementiert werden, die in vielen Fällen ohne aufwändige am oder im Motor anzubringende Sensoren auskommt.

Darüber hinaus kann durch die nachfolgend beschriebene Reduktion eines detaillierten thermischen Simulationsmodells zum reduzierten thermischen Simulationsmodell RST ein Rechenaufwand für die thermische Simulation in vielen Fällen erheblich gesenkt werden. Insofern eine hinreichend genaue thermische Simulation oft einen wesentlichen oder dominierenden Anteil eines Gesamt-Rechenaufwands einnimmt, kann dieser in vielen Fällen signifikant reduziert werden.

Figur 2 veranschaulicht eine Generierung des reduzierten thermischen Simulationsmodells RST für die Motorsteuerung CTL aus einem vorgegebenen detaillierten thermischen Simulationsmodell ST. Insofern in Figur 2 die gleichen oder korrespondierende Bezugszeichen wie in Figur 1 verwendet werden, bezeichnen diese Bezugszeichen die gleichen oder korrespondierende Entitäten, die insbesondere wie oben beschrieben, implementiert oder ausgestaltet sein können. Einige der in Figur 1 dargestellten Komponenten und Datenflüsse der Motorsteuerung CTL und der Maschine M sind in Figur 2 aus Übersichtlichkeitsgründen nicht mehr explizit dargestellt.

Das detaillierte thermische Simulationsmodell ST wird im dritten Simulationsmodul S3 als finite-Elemente-Modell mit einer Vielzahl von ortsaufgelösten Ansatzfunktionen FE1, FE2, ... implementiert. Zur Implementierung werden dem dritten Simulationsmodul S3 zumindest ein Teil der Strukturdaten SD zugeführt. Im Rahmen des finite-Elemente-Modells wird derjenige Bereich der Maschine M, für den eine thermische Simulation ausgeführt werden soll, in eine Vielzahl von finiten Raumelementen zerlegt. Auf diesen finiten Raumelementen werden dann im Rahmen des finite-Elemente-Modells lokalisierte Ansatzfunktionen, hier FE1, FE2, ... definiert. Die einzelnen Ansatzfunktionen FE1, FE2, ... beschreiben hierbei bekanntlich das zu simulierende Verhalten, hier ein Temperaturverhalten, in einem jeweiligen finiten Raumelement. Für die Zerlegung in die finiten Raumelemente, für die Ausgestaltung der Ansatzfunktionen FE1, FE2, ... sowie für die Ausführung finite-Elemente-basierter Simulationen steht eine Vielzahl von effizienten Programmbibliotheken zur Verfügung.

Im vorliegenden Fall wird die Zerlegung in die finiten Raumelemente abhängig von in den zugeführten Strukturdaten SD enthaltenen Geometriedaten der Maschine M durchgeführt. Ausgehend davon wird eine in die finiten Raumelemente diskretisierte Wärmeleitungsgleichung anhand von in den zugeführten Strukturdaten SD enthaltenen ortsaufgelösten Daten über die Wärmeleitfähigkeit von Elementen der Maschine M aufgestellt.

Zur Aufstellung und Lösung einer solchen diskretisierten Wärmeleitungsgleichung steht eine Vielzahl von bekannten und effizienten Verfahren zur Verfügung.

Häufig ist für eine hinreichend genaue thermische Simulation allerdings eine große Anzahl von finiten Elementen erforderlich, was in der Regel einen erheblichen Rechenaufwand induziert. Aus diesem Grund wird das detaillierte thermische Simulationsmodell ST durch eine Transformation T in ein vereinfachtes thermisches Simulationsmodell, hier RST, mit einer wesentlich geringeren Anzahl von Ansatzfunktionen F1, F2, ... transformiert.

Das reduzierte thermische Simulationsmodell RST wird zunächst anhand der in den zugeführten Strukturdaten SD enthaltenen Geometriedaten oder anhand von geometrischen Strukturen des detaillierten thermischen Simulationsmodells ST geometrisch initialisiert. Weiterhin werden die temperaturkritischen Stellen P1 und P2 bezüglich der Strukturdaten SD lokalisiert. Dabei werden insbesondere Koordinaten der temperaturkritischen Stellen P1 und P2 bezüglich eines in den Strukturdaten SD definierten Koordinatensystems ermittelt.

Ausgehend davon werden spezifisch auf die temperaturkritischen Stellen P1 und P2 fokussierte oder daran angepasste Ansatzfunktionen F1, F2, ... selektiert und/oder ausgestaltet. Die Ansatzfunktionen F1, F2, ... können dabei zumindest teilweise durch die Transformation T aus den Ansatzfunktionen FE1, FE2, ... generiert werden. Bei der Selektion und/oder Ausgestaltung der Ansatzfunktionen F1, F2, ... werden die temperaturkritischen Stellen P1 und P2 gegenüber anderen, weniger temperaturkritischen oder eine Wärmeleitung weniger beeinflussenden Stellen der Maschine M bevorzugt. Durch eine solche Ausdünnung, Vergröberung und/oder Vernachlässigung von Ansatzfunktionen an weniger kritischen Stellen kann die Anzahl der Ansatzfunktionen F1, F2, ... in vielen Fällen erheblich gegenüber der Anzahl der Ansatzfunktionen FE1, FE2, ... reduziert werden.

Zur weiteren Anpassung des reduzierten thermischen Simulationsmodells RST werden diesem sowie dem detaillierten thermischen Simulationsmodell ST jeweils eine Vielzahl von als Wärmequellen wirkenden, orts- und zeitaufgelösten Energieverlusten Q als Eingabedaten zugeführt. Die Energieverluste Q können beispielsweise eine Vielzahl von aufgezeichneten oder simulierten elektrischen Energieverlusten QE und/oder mechanischen Energieverlusten QM der Maschine M umfassen. Darüber hinaus können auch Umgebungstemperaturen und/oder Luftgeschwindigkeiten in einer Umgebung der Maschine M als Wärmequellen oder Wärmesenken durch die Energieverluste Q dargestellt werden.

Anhand der zugeführten Vielzahl von Energieverlusten Q wird mittels des detaillierten thermischen Simulationsmodells ST eine Vielzahl von jeweils zugehörigen, orts- und zeitaufgelösten Temperaturverläufen TV in der Maschine M simuliert. Die simulierten Temperaturverläufe TV werden vom dritten Simulationsmodul S3 zu einem Auswertungsmodul EV der Motorsteuerung CTL übermittelt. Das Auswertungsmodul EV wertet die Temperaturverläufe TV jeweils an den temperaturkritischen Stellen P1 und P2 aus und ermittelt so simulierte Verläufe von Temperaturen T1 und T2 an den temperaturkritischen Stellen P1 und P2.

Analog dazu wird mittels des reduzierten thermischen Simulationsmodells RST anhand der zugeführten Vielzahl von Energieverlusten Q eine Vielzahl von Verläufen von jeweils zugehörigen Temperaturen RT1 und RT2 an den temperaturkritischen Stellen P1 und P2 ermittelt.

Das reduzierte thermische Simulationsmodell RST und/oder seine Ansatzfunktionen F1, F2, ... werden nun so eingestellt und/oder parametrisiert, dass die Temperaturen RT1 und RT2 die Temperaturen T1 und T2 möglichst genau reproduzieren. Zu diesem Zweck wird eine Abweichung D der Verläufe der Temperaturen RT1 und RT2 von den zugehörigen Verläufen der Temperaturen T1 und T2 ermittelt. Die Abweichung D kann insbesondere als zeitliches Integral oder als zeitliche Summe über einen Betrag oder ein Quadrat einer Differenz zwischen einem jeweiligen Temperaturpaar (RT1, RT2) und dem jeweils zugehörigen Temperaturpaar (T1, T2) ermittelt werden. Beispielsweise gemäß D = Integral [(RT1(t)-T1(t))2 + (RT2(t)-T2(t))2] dt.

Die Abweichung D wird - wie in Figur 2 durch strichlierte Pfeile angedeutet - zum dritten Simulationsmodul S3 zurückgeführt. Anhand der Abweichung D werden das reduzierte thermische Simulationsmodell RST und/oder seine Ansatzfunktionen F1, F2, ... so eingestellt und/oder parametrisiert, dass die Abweichung D minimiert wird. Für derartige Minimierungsprobleme steht eine Vielzahl effizienter Optimierungsverfahren zur Verfügung.

Vorzugsweise wird die auf diese Weise erreichbare minimale Abweichung D mit einem vorgegebenen Abweichungs-Schwellwert verglichen. Solange der Abweichungs-Schwellwert von der minimalen Abweichung D nicht überschritten wird, kann der Reduktionsprozess des reduzierten thermischen Simulationsmodells RST fortgesetzt werden; insbesondere indem die Ansatzfunktionen F1, F2, ... weiter ausgedünnt, vergröbert oder gestrichen werden.

Auf diese Weise kann das reduzierte thermische Simulationsmodell RST bei vorgebbarer Genauigkeit in vielen Fällen erheblich vereinfacht werden, so dass eine Echtzeitsimulation des thermischen Verhaltens der Maschine M in vielen Fällen nur verhältnismäßig geringe Rechenressourcen erfordert.

## Patentansprüche

1. Computerimplementiertes Verfahren zur Temperaturüberwachung einer elektromechanischen Maschine (M) anhand von elektrischen Betriebsdaten (U, I) der Maschine (M), wobei
a) Strukturdaten (SD) über eine Geometrie, eine Wärmeleitfähigkeit und eine elektrische Leitfähigkeit von Elementen der Maschine eingelesen werden,
b) vorgegebene temperaturkritische Stellen (P1, P2) der Maschine bezüglich der Strukturdaten (SD) lokalisiert werden,
c) mittels eines eine Vielzahl von ortsaufgelösten Ansatzfunktionen (FE1, FE2,...) umfassenden, ersten thermischen Simulationsmodells (ST) anhand der Strukturdaten (SD) eine Vielzahl von Temperaturverläufen (TV) in der Maschine ortsaufgelöst simuliert werden,
d) ein reduziertes thermisches Simulationsmodell (RST) mit einer gegenüber dem ersten thermischen Simulationsmodell (ST) geringeren Vielzahl von Ansatzfunktionen (F1, F2,...) derart generiert und eingestellt wird, dass es die Temperaturverläufe (TV) spezifisch an den temperaturkritischen Stellen (P1, P2) im Wesentlichen reproduziert,
e) die elektrischen Betriebsdaten (U, I) im laufenden Betrieb der Maschine erfasst werden,
f) anhand der Strukturdaten (SD) und der elektrischen Betriebsdaten (U, I) fortlaufend elektrische Energieverluste (QE) in der Maschine mittels eines elektrischen Simulationsmodells (SE) der Maschine ortsaufgelöst simuliert werden,
g) anhand der Strukturdaten (SD) und der simulierten elektrischen Energieverluste (QE) fortlaufend Temperaturen (RT1, RT2) an den temperaturkritischen Stellen (P1, P2) mittels des reduzierten thermischen Simulationsmodells (RST) ermittelt werden, und
h) die ermittelten Temperaturen (RT1, RT2) zur Temperaturüberwachung der Maschine ausgegeben werden.

2. Verfahren nach Anspruch 1, **dadurch gekennzeichnet,**
**dass** durch die elektrischen Betriebsdaten (I, U) ein Betriebsstrom (I) und/oder eine Betriebsspannung (U) der Maschine (M) quantifiziert wird.

3. Verfahren nach einem der vorhergehenden Ansprüche, **dadurch gekennzeichnet,**
**dass** die Ansatzfunktionen (F1, F2,...) des reduzierten thermischen Simulationsmodells (RST) derart aus den Ansatzfunktionen (FE1, FE2,...) des ersten thermischen Simulationsmodells (ST) selektiert und/oder derart parametrisiert werden, dass eine Abweichung (D) zwischen den vom reduzierten thermischen Simulationsmodell (RST) und den vom ersten thermischen Simulationsmodell (ST) ermittelten Temperaturverläufen spezifisch an den temperaturkritischen Stellen (P1, P2) minimiert wird.

4. Verfahren nach einem der vorhergehenden Ansprüche, **dadurch gekennzeichnet,**
**dass** eine Umgebungstemperatur der Maschine und/oder eine Luftgeschwindigkeit in einer Umgebung der Maschine fortlaufend sensorisch erfasst wird, und
**dass** die Temperaturen an den temperaturkritischen Stellen (P1, P2) abhängig von der Umgebungstemperatur und/oder der Luftgeschwindigkeit ermittelt werden.

5. Verfahren nach einem der vorhergehenden Ansprüche, **dadurch gekennzeichnet,**
**dass** anhand der Strukturdaten (SD) und mechanischen Betriebsdaten (RPM) der Maschine (M) mechanische Energieverluste (QM) in der Maschine mittels eines mechanischen Simulationsmodells (SM) der Maschine ortsaufgelöst simuliert werden, und
**dass** die Temperaturen an den temperaturkritischen Stellen (P1, P2) anhand der simulierten mechanischen Energieverluste (QM) ermittelt werden.

6. Verfahren nach Anspruch 5, **dadurch gekennzeichnet,**
**dass** durch die mechanischen Betriebsdaten (RPM) eine Drehzahl, ein Drehmoment, eine Bewegungsgeschwindigkeit und/oder eine ausgeübte Kraft der Maschine (M) quantifiziert wird.

7. Verfahren nach einem der vorhergehenden Ansprüche, **dadurch gekennzeichnet,**
**dass** Strukturdaten (SD) über die elektrische Leitfähigkeit und/oder die Wärmeleitfähigkeit der Maschinenelemente abhängig von den ermittelten Temperaturen (RT1, RT2) modifiziert werden, und
**dass** eine Simulation der elektrischen Energieverluste (QE) und/oder eine Ermittlung der Temperaturen (RT1, RT2) an den temperaturkritischen Stellen (P1, P2) anhand der modifizierten Strukturdaten durchgeführt wird.

8. Verfahren nach einem der vorhergehenden Ansprüche, **dadurch gekennzeichnet,**
**dass** abhängig von den ermittelten Temperaturen an den temperaturkritischen Stellen (P1, P2)
- die Maschine (M) heruntergeregelt wird,
- eine Angabe über einen optimierten Betrieb der Maschine (M) ausgegeben wird,
- eine Empfehlung für einen optimierten Betrieb der Maschine (M) ausgegeben wird und/oder
- eine Kühlungseinrichtung angesteuert wird.

9. Verfahren nach einem der vorhergehenden Ansprüche, **dadurch gekennzeichnet,**
**dass** anhand der Strukturdaten (SD) eine Position einer vorgegebenen Maschinenkomponente ermittelt wird,
**dass** die ermittelte Position als temperaturkritische Stelle (P1, P2) verwendet wird, und
**dass** die ermittelte Temperatur (RT1, RT2) an dieser Position als komponentenspezifischer Temperaturwert ausgegeben wird.

10. Maschinensteuerung (CTL) zum Betrieb und zur Temperaturüberwachung einer elektromechanischen Maschine (M), mit Mitteln zum Ausführen der Schritte eines Verfahrens nach einem der vorhergehenden Ansprüche.

11. Computerprogrammprodukt, umfassend Befehle, die bei der Ausführung des Programms durch einen Computer diesen veranlassen ein Verfahren nach einem der Ansprüche 1 bis 9 auszuführen.

12. Computerlesbares Speichermedium mit einem Computerprogrammprodukt nach Anspruch 11.
